Europäisches Patentamt

European Patent Office

Office européen des brevets

(19)

(11) Publication number: **0 148 693**
A2

# EUROPEAN PATENT APPLICATION

(21) Application number: 84402664.1

(22) Date of filing: 19.12.84

(51) Int. Cl.⁴: **C 08 L 27/06**, C 08 J 9/14
//
(C08L27/06, 25:16, 33:12, 25:12)

(30) Priority: 23.12.83 JP 252165/83

(71) Applicant: Shin-Etsu Chemical Co., Ltd., 6-1, Ohtemachi 2-chome, Chiyoda-ku, Tokyo (JP)

(43) Date of publication of application: 17.07.85 Bulletin 85/29

(72) Inventor: Eguchi, Yoshitugu, 9809-7, Yatabe Hazaki-machi, Kashima-gun Ibaraki-ken (JP)
Inventor: Matsumoto, Osamu, 9809-7, Yatabe Hazaki-machi, Kashima-gun Ibaraki-ken (JP)

(84) Designated Contracting States: BE CH DE FR GB IT LI NL

(74) Representative: Armengaud, Alain et al, Cabinet ARMENGAUD AINE 3 Avenue Bugeaud, F-75116 Paris (FR)

(54) A foamable vinyl chloride resin composition and a method for the preparation of a foamed body thereof.

(57) The invention provides a novel foamable vinyl chloride-based resin composition suitable for shaping into a cellular foamed body of high expansion and with good heat stability by extrusion using an extruder machine, in the cylinder of which the resin composition is heated and softened and then uniformly impregnated with a volatilizable blowing agent such as a low-boiling aliphatic hydrocarbon compound before extrusion out of the extruder. The most characteristic component in the foamable resin composition is an α-methylstyrene-based resin which is formulated in an amount from 10 to 100 parts by weight per 100 parts by weight of the vinyl chloride-based resin as the main component together with a cell-uniformizing agent which is a decomposable blowing agent or a fine powdery material and a foam-conditioning agent which is an acrylic resin or a styrene-based resin.

ACTORUM AG

0148693

# A FOAMABLE VINYL CHLORIDE RESIN COMPOSITION AND A METHOD FOR THE PREPARATION OF A FOAMED BODY THEREOF

## BACKGROUND OF THE INVENTION

The present invention relates to a foamable composition of a vinyl chloride-based resin and a foamed body prepared by foaming the foamable resin composition as well as a method for the preparation of the foamed body of the resin composition. More particularly, the invention relates to a method for the continuous preparation of a highly expanded foamed body of a vinyl chloride-based resin composition having excellent heat stability and a very uniform and fine cellular structure with outstandingly low production costs.

Several methods are known in the prior art for the preparation of a foamed body of a vinyl chloride-based resin including, for example, (1) a method in which a vinyl chloride-based resin is admixed and blended with a decomposable blowing agent, which is a compound capable of producing a large volume of a gas by the thermal decomposition, and the blend is shaped by heating with simultaneous foaming by use of an extrusion or injection molding machine, (2) a method in which a paste-like composition or a so-called plastisol is prepared by blending a vinyl chloride-based resin and a plasticizer and foamed by mechanical entrainment of air or the plastisol is further admixed with a decomposable blowing agent and the mixture is foamed by heating with simultaneous gelation to give a desired shaped foam product, (3) a method in which a resin composition containing a decomposable blowing agent is shaped by rolling at a temperature below the decomposition temperature of the blowing agent followed by heating the shaped body to effect decomposition and blowing of the decomposable blowing agent giving a foamed body and (4) a method in which a metal mold is filled with a resin composition of a vinyl chloride-based resin and a decomposable blowing agent with further admixture of, according to need, a volatilizable blowing agent, organic swelling solvent, softening agent and the like and the mixture is subjected to melting and gelation with heating under pressure followed by cooling and then re-heating with the pressure released to effect foaming.

Each of the above described methods, however, has respective disadvantages and problems. For example, the methods (1) to (3) are not applicable when a rigid or semi-rigid foamed body of high expansion is desired and the method (4) is disadvantageous as a batch-wise peocess including complicated steps due to the high production costs of the final foamed products and the long time taken for the production.

An improved method in respect of the above mentioned disadvantages has been proposed in Japanese Patent Kokai 55-149328. In this method, a vinyl chloride-based resin is admixed with a heat stabilizer, a nucleating agent such as

- 3 -    0148693

talc, an acrylic resin and a decomposable blowing agent such as an azodicarbonamide compound and the like and this resin composition is supplied to an extruder machine in which the resin composition is heated into a gelled condition and impregnated under pressurization with a volatilizable blowing agent of an organic solvent type such as an aliphatic hydrocarbon or a halogenated aliphatic hydrocarbon compound of a low boiling point exemplified by propane, butane, pentane, methyl chloride, trichloro fluoromethane, dichloro tetrafluoroethane and the like followed by extrusion out of the machine to effect foaming of the resin composition.

The foamed body shaped by this method is not quite satisfactory in respect of the poor heat stability like the conventional foamed bodies prepared by the above described prior art methods exhibiting great changes in dimensions at an elevated temperature so that the working temperature of such a foamed body can rarely exceed 60 $^\circ$C and the application fields of the products are limited.

## SUMMARY OF THE INVENTION

It is therefore an object of the present invention to provide a foamable vinyl chloride-based resin composition which can be expanded into a foamed cellular body without the above described disadvantages and problems in the prior art resin compositions.

- 4 -

0148693

Another object of the invention is to provide a foamed cellular body of a vinyl chloride-based resin composition of high expansion having excellent heat stability and a very fine and uniform cellular structure capable of being produced with outstandingly low production costs and without the above described disadvantages and problems in the prior art foamed bodies of a vinyl chloride-based resin composition as well as a method for the preparation of such a foamed cellular body.

Thus, the foamable vinyl cloride-based resin composition provided by the present invention comprises:

(a) 100 parts by weight of a vinyl chloride-based resin;

(b) from 10 to 100 parts by weight of an $\alpha$-methylstyrene-based resin;

(c) at least 0.01 part by weight of a cell-uniformizing agent selected from the group consisting of decomposable blowing agents and fine powdery materials having a high melting point; and

(d) from 3 to 30 parts by weight of a foam conditioning agent selected from the group consisting of acrylic resins and styrene-based resins.

In the inventive method for the preparation of a foamed body of a vinyl chloride-based resin, the above described foamable resin composition is introduced into the cylinder of an extruder machine in which the resin composition is heated into a softened condition and impregnated with a volatilizable blowing agent of the organic solvent type under
pressurization followed by extrusion out of the extruder machine to be shaped into a form with simultaneous foaming.

### DETAILED DESCRIPTION OF THE PREFERRED EMBODIMENTS

The component (a) as the base ingredient in the inventive foamable resin composition is a vinyl chloride-based
resin which is not limited to homopolymeric vinyl chloride
resins but includes various kinds of copolymers, graft copolymers and polymer blends mainly composed of vinyl chloride moieties or a polyvinyl chloride. The comonomers copolymerizable with vinyl chloride to form a vinyl chloride-
based copolymer are exemplified by vinyl esters such as vinyl acetate, vinylidene chloride, acrylic and methacrylic
acids and esters thereof, acrylonitrile, methacrylonitrile,
maleic acid and esters and anhydride thereof, fumaric acid
and esters thereof, olefins such as ethylene and propylene,
vinyl ethers and the like though not limited thereto. These
comonomers may be copolymerized with vinyl chloride either
singly or as a combination of two kinds or more according to
need. The polymeric material as a component of the vinyl
chloride-based polymer blend should have good compatibility
with polyvinyl chloride resins or vinyl chloride-based copolymers and suitable polymers for such a purpose include,
for example, polyvinylidene chloride, copolymers of ethylene
and vinyl acetate, ABS resins, MBS resins, chlorinated polyethylenes and synthetic rubbers such as NBR, SBR and the like though not limited thereto. At any rate, it is preferable that at least 50 % by weight of the component (a) is constituted with the vinyl chloride moieties.

The component (b) is an $\alpha$-methylstyrene-based resin and effective to impart improved heat resistance to the foamed body prepared of the inventive foamable vinyl chloride-based resin composition. This component is not limited to homo-polymeric $\alpha$-methylstyrene resins but various kinds of $\alpha$-methylstrene-based resins are suitable for the purpose including copolymers mainly composed of $\alpha$-methlstyrene co-polymerized with one or more comonomers and graft copolymers of which the base polymer for grafting is a poly($\alpha$-methyl-styrene). Particularly preferable copolymers and graft copolymers are those composed of the monomeric moieties including from 50 to 95 parts by weight of $\alpha$-methylstyrene, from 3 to 30 parts by weight of acrylonitrile, up to 30 parts by weight of methyl methacrylate and up to 5 parts by weight of other copolymerizable vinylic monomers.

Along with the above described component (b) as a heat resistance improver, it is sometimes advantageous in order to improve the impact resistance of the foamed cellular body that the resin composition is admixed with an impact resistance improver which may be an ABS resin obtained by the graft copolymerization of styrene and acrylonitrile on a polybutadiene rubber, crosslinked acrylic rubber, MBS resin and the like. In this case, the impact resistance improver should preferably be admixed with the component (b) in the form of a latex. The amount of the component (b) in such a mixture with the impact resistance improver should preferably be at least 50 % by weight or, more preferably, at least 60 % by weight. Conventional procedures of emulsion polymerization are applicable to the polymerization of $\alpha$-methylstyrene or copolymerization of a monomer mixture mainly composed thereof as well as to the graft copolymerization of various monomers on the base of an $\alpha$-methylstyrene polymer.

The amount of the component (b) in the inventive foamable resin composition should be in the range from 10 to 100 parts by weight or, preferably, from 20 to 100 parts by weight per 100 parts by weight of the vinyl chloride-based resin as the component (a). No sufficient improvement can of course be obtained in the heat resistance of the resultant foamed cellular body when the amount of the component (b) is smaller than the above specified range while an excessively large amount of the component (b) is undesirable because of the adverse effects on the excellent properties inherent to vinyl chloride-based resins such as flame retardancy, weathering resistance and others.

The component (c) is a cell-uniformizing agent having an effect to control the cellular structure of the foamed cellular body relative to the uniformity and fineness of the cells formed in the course of shaping with simultaneous foaming. This component may be a thermally decomposable blowing agent, a fine powdery material having a high melting point or a combination thereof. The decomposable blowing agent should have a decomposition temperature for producing gaseous decomposition products preferably lower than the molding temperature of the vinyl chloride-based resin as the component (a).

The decomposable blowing agents suitable for the purpose include, for example, azo compounds known as a blowing agent such as azodicarbonamide, azobisisobutyronitrile, diazoaminobenzene, diethyl azodicarboxylate, diisopropyl azodicarboxylate, diazoaminobenzene and the like, nitroso compounds known as a blowing agent such as N,N'-dinitroso pentamethylene tetramine, N,N'-dinitroso terephthalamide and the like and sulfonyl hydrazide compounds known as a blowing agent such as benzene sulfonyl hydrazide, toluene sulfonyl hydrazide, 3,3'-disulfonehydrazide phenyl sulfone, toluene disulfonyl hydrazone, thiobis(benzene sulfonyl hydrazide), toluene sulfonyl azide, toluene sulfonyl semicarbazide, 4,4'-hydroxybis(benzene sulfonylhydrazide) and the like as well as sodium hydrogencarbonate.

It is preferable that the above mentioned thermally decomposable blowing agent is used in combination with a decomposition aid or accelerator such as oxalic acid, citric acid, tartaric acid, urea, zinc compounds, copper compounds and the like so that the decomposition temperature of the blowing agent is controlled to more uniformly produce the gaseous decomposition products at a temperature lower than the molding temperature of the vinyl chloride-based resin.

The fine powdery material having a high melting point as the other class of the cell-uniformizing agent should have a melting point higher than the melting point or gelation point of the vinyl chloride-based resin as the component (a). Exemplary of suitable ones are calcium carbonate, talc, mica, sericite, barium sulfate, silica, fumed silica, titanium dioxide, clay, aluminum oxide, bentonite, diatomaceous earth, carbon black and the like. Certain inorganic pigments, heat stabilizers and flame retardants having a high melting point also may have the same effect as these inorganic powdery materials.

The fine powdery material as the component (c) should have a particle size distribution not exceeding $30 \mu$m or, preferably, $10 \mu$m after it is blended and dispersed in the resin composition. When the particle size of the fine powdery material is larger than $30 \mu$m, flowability of the resin composition during shaping by extrusion is decreased so that the foamed cellular body has a decreased surface luster with

0148693

flow marks or striation and the uniformity of the cellular structure is decreased.

The amount of the component (c) in the inventive foamable resin composition should be at least 0.01 part by weight per 100 parts by weight of the vinyl chloride-based resin as the component (a). When the amount of the component is smaller than 0.01 part by weight, the desired effects to be obtained with this component cannot be obtained as a matter of course in respect of the fineness and uniformity of the cellular structure. When the component (c) is a thermally decomposable blowing agent, the amount thereof in the inventive foamable resin composition should be about 5 parts by weight or smaller per 100 parts by weight of the vinyl chloride-based resin as the component (a) since no further additional advantages can be expected by increasing the amount of this component over 5 parts by weight. When the component (c) is a fine powdery material having a high melting point, on the other hand, the amount thereof in the resin composition should be about 20 parts by weight or smaller per 100 parts by weight of the component (a) since no additional cell-uniformizing effect can be obtained by further increasing the amount thereof although it is optional to formulate the inventive resin composition with a still larger amount of the fine powdery material having a high melting point as the component (c) with an object to obtain other advantageous effects given by the component which also works as a reinforcing filler or extender, flame retardant and the like.

The component (d) in the inventive foamable resin composition is an acrylic or a styrene-based resin and is effective as a foam-conditioning agent to accelerate or control the gelation of the vinyl chloride-based resin and to adequately increase or control the viscosity of the resin melt so that coalescence or shrinking of the once formed foams is prevented and the gaseous blowing agent is retained and confined within the molten resin as it is produced without outward dissipation to give a foamed body of high expansion with a satisfactory cellular structure. Such a remarkable advantageous effect can be obtained by the combined use of the component (d) with the component (c) so that the resultant foamed cellular body of high expansion is absolutely free from cell shrinkage and has a very fine and uniform cellular structure and a very beautiful appearance.

A class of the component (d) includes acrylic resins which should preferably have a reduced viscosity of at least 3.0 dl/g at 20 °C as determined in a chloroform solution of a concentration of 0.1 g/100 ml in order to achieve the above mentioned desirable effects. Such a high-polymeric acrylic resin has an effect to accelerate uniform gelation of the vinyl chloride-based resin, to adequately increase the viscosity of the resin melt, to impart rubbery elasticity thereto and to increase the tensile strength or elongation of the resin at high temperatures. The degree of polymerization of the acrylic resin should be higher as the vinyl chloride-based resin has a higher degree of polymerization. It is of course desirable that the acrylic resin has good compatibility with the vinyl chloride-based resin.

Acrylic resins suitable for the purpose in the formulation of the inventive foamable resin composition include polymers of methyl methacrylate and copolymers mainly composed of methyl methacrylate with one or more comonomers such as esters of acrylic acid and monomers copolymerizable therewith. The above mentioned esters of acrylis acid are exemplified by methyl acrylate, ethyl acrylate, n-butyl acrylate, isobutyl acrylate and 2-ethylhexyl acrylate and the monomers copolymerizable therewith are exemplified by styrene, unsaturated nitriles, vinyl esters and esters of methacrylic acid other than methyl methacrylate such as ethyl mehtacrylate, n-butyl methacrylate and 2-ethylhexyl methacrylate.

An acrylic resin having the above mentioned relatively large reduced viscosity or a relatively large average molecular weight can be prepared by controlling various conditions in the polymerization of the monomer or monomers according to a known procedure such as the polymerization temperature, amount of the polymerization initiator, concentration of the chain transfer agent and the like. Generally, polymers of larger molecular weight can be obtained by decreasing the polymerization temperature, amount of the polymerization initiator and concentration of the chain transfer agent in the polymerization mixture.

It is sometimes advantageous to use an acrylic resin prepared by the method of emulsion polymerization as the component (d) since such an acrylic resin is remarkably effective, in addition to the above mentioned advantages, to improve the take-in of the resin composition into the extruder machine without blocking at the feed port of the resin composition so that the extruder machine can be operated with a smooth feed rate of the resin composition and stability in the pressure and torque of the extruder as well as an increased rate of extrusion resulting in a high uniformity of the product quality.

The other class of the component (d) includes styrene-based resins having good compatibility with the vinyl chloride-based resin and capable of exhibiting similar advantageous effects to the above described acrylic resins. The styrene-based resin is preferably a copolymer of styrene with acrylonitrile and/or one or more of comonomers copolymerizable therewith, of which the main monomeric moieties, e.g. 50 % by weight or more, should be styrene. The comonomers copolymerizable with styrene and acrylonitrile are exemplified by esters of acrylic acid such as methyl acrylate, ethyl acrylate, n-butyl acrylate, isobutyl acrylate and 2-ethylhexyl acrylate, esters of methacrylic acid such as methyl methacrylate, ethyl methacrylate, n-butyl methacrylate and 2-ethylhexyl methacrylate, maleic and fumaric acids and esters thereof, maleic anhydride and the like.

The styrene-based resin should preferably have a reduced viscosity of at least 3.0 dl/g at 20 °C as determined in a chloroform solution of a concentration of 0.1 g/100 ml. A vinyl chloride-based resin as the component (a) having a higher degree of polymerization should be formulatd preferably with a styrene-based resin as the component (d) having a correspondingly higher degree of polymerization. Any of the styrene-based resins prepared by the conventional method of polymerization can be used as the component (d) in the inventive foamable resin composition but a resin prepared by the method of emulsion polymerization is preferred in view of the relatively high degree of polymerization and good dispersibility in the vinyl chloride-based resin as the component (a).

The amount of the component (d), i.e. the acrylic resin, styrene-based resin or a combination thereof, in the inventive foamable resin composition should be in the range from 3 to 30 parts by weight or, preferably, from 3 to 20 parts by weight per 100 parts by weight of the vinyl chloride-based resin as the component (a). When the amount of this component is smaller than 3 parts by weight, the desired advantageous effects due to this component connot be obtained. On the other hand, no additional advantages can be obtained by increasing the amount over 30 parts by weight rather with some adverse influences on the advantageous properties inherent to the vinyl chloride-based resin such as flame retardancy.

The foamable vinyl chloride-based resin composition of the invention composed of the above described components (a) to (d) may be further admixed with other optional additives known in conventional vinyl chloride-based resin composition according to need although the amount or amounts thereof should be limited to have no adverse effects on the excellent properties inherently possessed by the inventive composition. The above mentioned optional additives include stabilizers, lubricants, plasticizers, modifiers, flame retardants, foam conditioners other than the above described component (d), ultraviolent absorbers, antioxidants, antistatic agents, pigments, inorganic fillers and the like. The inventive foamable resin composition can be prepared by uniformly blending the above described components (a) to (d) and other optional additives in a suitable blending machine such as a Henschel mixer, Banbury mixer and the like.

In the inventive method for the preparation of a foamed cellular body of a vinyl chloride-based resin composition, the above described foamable resin composition is introduced into the cylinder of an extruder machine in which it is heated into a softened and at least partly gelled condition and impregnated with a volatilizable blowing agent of the organic solvent type under pressurization followed by extrusion out of the extruder machine to be shaped into a form with simultaneous foaming. The volatilizable blowing agent of the organic solvent type used here is preferably a volatile organic compound having a boiling point at 90 °C or below exemplified by aliphatic hydrocarbon compounds and aliphatic halogenated hydrocarbon compounds such as propane, butane, isobutane, pentane, neopentane, n-hexane, isohexane, n-heptane, petroleum ether, methyl chloride, methylene chloride, chloroform, carbon tetrachloride, ethyl chloride, ethylidene chloride, trichloroethylene, 1,2-dichloroethane, trichloro fluoromethane, dichloro difluoromethane, bromo trifluoromethane, tetrafluoromethane, dichloro fluoromethane, chloro trifluoromethane, trifluoromethane, trichloro trifluoroethane, dichloro tetrafluoroethane, dibromo tetrafluoroethane, chloro pentafluoroethane, hexafluoroethane, chloro difluoroethane, difluoroethane, dimethyl ether, diethyl ether and the like. These volatilizable blowing agents may be used either singly or as a combination of two kinds or more according to need.

In the impregnation of the softened or molten vinyl

- 17 -

0148693

chloride-based resin composition in an at least partly gelled condition in the cylinder of an extruder machine with the above described volatilizable blowing agent under pressurization, it is sometimes advantageous that the blowing agent is pressurized together with an aromatic hydrocarbon compound, aromatic halogenated hydrocarbon compound, ester compound, ketone compound and the like having good compatibility with the vinyl chloride-based resin so that dispersion of the volatilizable blowing agent in the resin composition is greatly facilitated and more uniform and finer dispersion thereof can be obtained resulting in a finer and more uniform cellular structure of the foamed cellular body of higher expansion.

The amount of the volatilizable blowing agent pressurized into the resin composition naturally depends on the desired bulk density or degree of expansion of the resultant foamed cellular body but it is usually in the range from 1 to 30 % by weight based on the overall amount of the foamable vinyl chloride-based resin composition.

In practicing the method of the invention, the foamable resin composition molten and impregnated with the volatilizable blowing agent under pressurization is kneaded in the mixing zone of the cylinder of the extruder machine to obtain uniform dispersion of the volatilizable blowing agent throughout the mass of the molten resin composition followed by uniform cooling to a somewhat decreased temperature suitable for foaming extrusion and then extruded out of the extruder under atmospheric pressure or a reduced pressure to be shaped into a desired form with simultaneous foaming.

The moment when the volatilizable blowing agent is pressurized into the extruder machine is not particularly limitative provided that no adverse effects are caused thereby such as backflow of the blowing agent toward the feed port of the resin composition and a decreased or less smooth rate of take-in of the resin composition into the extruder as a consequence. In particular, pressurization of the volatilizable blowing agent into the extruder should preferably be performed at a moment when the resin composition heated in the extruder is in an at least partially gelled condition or, more preferably, in a fully gelled condition so that the volatilizable blowing agent can be readily and uniformly dispersed into the resin composition in a gell-like condition resulting in a finer and more uniform cellular structure of the foamed cellular body of high expansion.

According to the above described-method of the present invention, highly expanded foamed bodies of a vinyl chloride-based resin composition having a very fine and uniform cellular structure can be shaped in the form of a plate, sheet, rod, tube and the like by extrusion with simultaneous

- 19 -                          0148693

foaming.


In the following, the foamable vinyl chloride-based resin composition of the invention and the method for the preparation of foamed shaped bodies thereof are described in more detail by way of Examples.


Example 1 (Experiments No. 1 to No. 12).

Vinyl chloride-based resin compositions were prepared each by uniformly blending in a Henschel mixer 100 parts by weight of a polyvinyl chlorde resin (PVC) having a degree of polymerization indicated in Table 1 below, 4 parts by weight of a lead-containing stabilizer, 1 part by weight of calcium stearate, either one of the $\alpha$-methylstyrene-based resins A-1, A-2 and A-3 specified below in an amount indicated in Table 1, one or two kinds of the cell-uniformizing agents talc and Celmic specified below and in an amount or amounts indicated in Table 1 and an acrylic resin E-1 or a styrene-based resin S-1 specified below as the foam-conditioning agent in an amount indicated in Table 1.


$\alpha$-Methylstyrene-based resins

A-1: a copolymer composed of 80 % by weight of $\alpha$-methylstyrene, 15 % by weight of acrylonitrile and 5 % by weight of methyl methacrylate and having a reduced viscosity of 0.47 dl/g at 20 °C in a chloroform solution of a concentration of 0.1 g/100 ml

A-2: a polymer blend composed of 80 % by weight of the above described copolymer A-1 and 20 % by weight of an ABS resin as an impact resistance improver, which was a graft copolymer prepared by the graft polymerization of 25 parts by weight of styrene and 20 parts by weight of acrylonitrile onto 55 parts by weight of a polybutadiene

A-3: a copolymer composed of 70 % by weight of $\alpha$-methylstyrene, 10 % by weight of acrylonitrile and 20 % by weight of methyl methacrylate having a reduced viscosity of 0.40 dl/g at 20 ºC

Acrylic and styrene-based resins

E-1: a copolymer composed of 75 % by weight of methyl methacrylate and 25 % by weight of butyl acrylate having a reduced viscosity of 9.9 dl/g at 20 ºC in a 0.1 g/100 ml chloroform solution

S-1: a copolymer composed of 70 % by weight of styrene and 30 % by weight of acrylonitrile having a reduced viscosity of 12.0 dl/g

Cell-uniformizing agents Talc: a commercial product by Tsuchiya Kaolin Co. having an average particle diameter of 1 to 3 $\mu$m

- 21 -   0148693

Celmic: an azodicarbonamide compound having a decomposition temperature in the range from 130 to 180 ℃ and sold under a tradename of Celmic 133 by Sankyo Kasei Co.

The thus obained resin composition was introduced into the cylinder of the first one of the two extruder machines connected in tandem as decribed below and shaped into a form by extrusion with simultaneous foaming and the shaped foamed body was examined for the bulk density in g/ml, condition of the cellular structure in respect of the fineness and uniformity of the cells, volume ratio of closed cells in % and temperature of heat resistance in ℃ to give the results shown in Table 1 under the criteria described below.

Construction of the extruder system

The first-stage extruder machine had a cylincer having an inner diameter of 20 mm with L/D = 25 provided with a feed port for introduction of the volatilizable blowing agent at a position 300 mm ahead from the feed port for the resin composition below the hopper, through which the volatilizable blowing agent could be pressurized into the cylinder by means of a double-plunger pump.

The second-stage extruder machine connected to the end of tne first-stage extruder had a cylinder of 25 mm diameter with L/D = 28 equipped at the end with a circular die having a diameter of 10 mm and a rand length of 100 mm.

Conditions for the operation of the extruder machines

(1) The first-stage extruder machine was operated at a velocity of 60 r.p.m. and the temperature of the cylinder was kept at $C_1$ = 140 to 160 °C, $C_2$ = 160 to 180 °C and $C_3$ = 170 to 190 °C at a position near the feed port, an intermediate position and a position near the end, respectively.

(2) The second-stage extruder machine was operated keeping the temperature of the cylinder at $C_1$ = 140 to 160 °C, $C_2$ = 120 to 140 °C and $C_3$ = 110 to 130 °C while the extrusion die was kept at 120 to 140 °C.

Kind and amount of the volatilizable blowing agent pressurized into the cylinder of the first-stage extruder machine

A 50:50 by weight mixture of methyl chloride and trichloro fluoromethane was pressurized into the cylinder in an amount from 13 to 16 % by weight based on the resin composition by use of a double-plunger pump.

Conditions of measurements and criteria of evaluation of the properties of the shaped foamed cellular bodies

(1) Cellular structure: the cellular structure of the foamed cellular body was visually examined and graded in A, B and C according to the following criteria.

A: The cellular structure was fine and uniform with a cell diameter of 300 μm or smaller.

B: The cellular structure was uniform but having a somewhat coarser cell diameter of 300 to 1000 μm.

C: The uniformity of the cellular structure was poor with an average cell diameter of 1000 μm or larger.

(2) Content of closed cells in %: the volume percentage of closed cells based on the bulk volume of the foamed body was determined with a test specimen of 20 mm x 20 mm x 40 mm dimensions by the air-substitution method in an air-comparator densimeter Model 930 manufactured by Beckman Co. which gave the volume of the body occupied by the closed cells and the value was calculated from the following equation,

content of closed cells, $\% = (\Delta V - w/\alpha)/V \times 100$,

in which V is the bulk volume of the foamed body in ml, w is the weight of the body in g, $\Delta V$ is the volume in ml as determined in the above mentioned air-comparator densimeter, and $\alpha$ is the true density of the resin composition forming the foamed body in g/ml.

(3) Temperature of heat resistance: the temperature of heat resistance was determined by keeping several test specimens of each 20 mm x 20 mm x 100 mm dimensions taken by cutting from a rod-like foamed cellular body for 24 hours each at a different temperature of 60 to 100 °C with a 5 °C interval followed by the measurement of the changes in dimensions to give an average value for three test specimens kept at the same temperature taking the highest heating

T a b l e  1

| Experiment No. | | 1 | 2 | 3 | 4 | 5 | 6 | 7 | 8 | 9 | 10 | 11 | 12 |
|---|---|---|---|---|---|---|---|---|---|---|---|---|---|
| Degree of polymerization of polyvinyl chloride | | 600 | 600 | 700 | 700 | 700 | 700 | 1050 | 700 | 700 | 1000 | 1000 | 1000 |
| $\alpha$-Methylstyrene-based resin (parts by weight) | | A-1(20) | A-3(30) | A-1(40) | A-1(60) | A-1(80) | A-1(100) | A-2(40) | None | A-2(5) | A-2(15) | None | A-3(10) |
| Cell-uniformizing agent, parts by weight | Talc | 2.0 | 1.0 | 1.0 | 2.0 | 2.0 | 2.0 | 1.0 | 1.0 | 1.0 | – | – | – |
| | Celmic | – | 0.3 | – | – | – | – | 0.3 | – | – | 0.3 | – | – |
| Acrylic or styrene-based resin (parts by weight) | | E-1 (5.0) | S-1 (8.0) | S-1 (10.0) | E-1 (4.0) | E-1 (8.0) | E-1 (8.0) | E-1 (15.0) | E-1 (8.0) | S-1 (8.0) | E-1 (2.0) | None | E-1 (8.0) |
| Bulk density of foamed body, g/ml | | 0.028 | 0.029 | 0.029 | 0.030 | 0.033 | 0.035 | 0.031 | 0.030 | 0.030 | 0.13 | 0.16 | 0.13 |
| Cellular structure | | A | A | A | A | A | A | A | A | A | C | C | C |
| Closed cells, % by volume | | 92 | 93 | 93 | 91 | 90 | 89 | 88 | 90 | 89 | 50 | 23 | 68 |
| Temperature of heat resistance, °C | | 70 | 70 | 75 | 80 | 85 | 90 | 75 | 60 | 60 | 65 | 60 | 65 |

temperature at which the dimensional changes did not exceed 1 % as the temperature of heat resistance.

Example 2 (Experiments No. 13 to No. 22).

The extruder system used in this example was composed of the following two extruder machines connected in tandem.

The first-stage extruder machine had a cylinder having an inner diameter of 50 mm with L/D = 30 provided with a feed port for introduction of the volatilizable blowing agent at a position 100 cm ahead from the hopper for the resin composition, through which the volatilizable blowing agent could be pressurized into the cylinder by means of a metering pressure pump. The second-stage extruder machine having a diameter of 65 mm with L/D = 30 was connected to the end of the first-stage extruder machine and equipped at the end thereof with a die for plate extrusion having a thickness of 5 mm and a width of 400 mm.

The foamable resin composition used in each of the Experiments was prepared by uniformly blending in a Henschel mixer 100 parts by weight of a homopolymeric polyvinyl chloride resin (TK 800, a product by Shin-Etsu Chemical Co.), one of the $\alpha$-methylstyrene-based resins A-4 to A-6 described below in an amount indicated in Table 2 below, 4 parts by weight of a lead-containing stabilizer, 1 part by weight of calcium stearate, 1 part by weight of talc and 12 parts by weight of an acyylic resin E-1 used in Example 1.

$\alpha$-Methylstyrene-based resins

A-4: a copolymer composed of 70 % by weight of $\alpha$-methylsty-
rene and 30 % by weight of acrylonitrile

A-5: a copolymer composed of 70 % by weight of $\alpha$-methylsty-
rene, 15 % by weight of acrylonitrile, 5 % by weight of
methyl methacrylate and 10 % by weight of styrene

A-6: a polymer blend prepared by blending 60 % by weight of
a copolymer prepared by the copolymerization of a
50:20:30 by weight monomer mixture of $\alpha$-methylstyrene,
styrene and acrylonitrile with 40 % by weight of the
same ABS resin used in the formulation of the $\alpha$-methyl-
styrene-based resin A-2

Kind and amount of the volatilizable blowing agent

A 80:20 by weight mixture of trichloro fluoromethane
and methyl chloride was pressurized into the feed port in
the cylinder of the first-stage extruder machine by means of
a metering pressure pump in an amount of 15 % by weight based on the resin composition.

Temperature conditions of the extruder system First-stage extruder machine: $C_1$ = 150 °C; $C_2$ = 180 °C;
$C_3$ = 190 °C; and $C_4$ = 180 °C from the hopper to the end along the cylinder

Second-stage extruder machine: temperatures of the cylinder $T_1$, $T_2$ and $T_3$ from the connection to the first-stage extruder to the die, temperature of the die $D_1$ and temperature of the resin composition $T_4$ at the head, i.e. inlet to the die, as shown in Table 2

Keeping the above described temperature conditions, the first-stage extruder machine was operated at 60 r.p.m. in a rate of extrusion of 40 to 45 kg/hour and the thus obtained foamed cellular body in a plate-like form was examined for the bulk density in g/ml, condition of cellular structure, content of closed cells in % by volume and temperature of heat resistance in ⁰C. The test speciments for the determination of the temperature of heat resistance had dimensions of 20 mm x 100 mm x 100 mm instead of 20 mm x 20 mm x 100 mm in Example 1. The results were as shown in Table 2.

Table 2

| Experiment No. | | 13 | 14 | 15 | 16 | 17 | 18 | 19 | 20 | 21 | 22 * |
|---|---|---|---|---|---|---|---|---|---|---|---|
| α-Methylstyrene-based resin(parts by weight) | | A-4 (30) | A-4 (50) | A-4 (70) | A-5 (100) | A-1 (40) | A-3 (40) | A-2 (10) | A-6 (20) | A-6 (40) | A-6 (60) |
| Temperature of cylinder in the second-stage extruder, °C | $T_1$ | 140 | 140 | 135 | 135 | 136 | 135 | 135 | 150 | 140 | 120 |
| | $T_2$ | 120 | 120 | 120 | 120 | 120 | 120 | 120 | 140 | 140 | 110 |
| | $T_3$ | 110 | 110 | 110 | 110 | 112 | 112 | 110 | 135 | 135 | 100 |
| Temperature of die, $D_1$, °C | | 128 | 129 | 128 | 128 | 128 | 129 | 128 | 140 | 130 | 120 |
| Temperature of resin composition, $T_4$, °C | | 133 | 132 | 131 | 130 | 132 | 133 | 130 | 149 | 146 | 119 |
| Bulk density of foamed body, g/ml | | 0.028 | 0.028 | 0.027 | 0.029 | 0.028 | 0.028 | 0.029 | 0.083 | 0.078 | 0.091 |
| Cellular structure | | A | A | A | A | A | A | A | B | B | B |
| Closed cells, % by volume | | 92 | 93 | 90 | 89 | 93 | 92 | 91 | 25 | 33 | 45 |
| Temperature of heat resistance, °C | | 70 | 75 | 80 | 90 | 75 | 75 | 60 | 60 | 65 | 65 |

\* Remarkably large torque in the second-stage extruder

0148693

- 1 -                           0148693

WHAT IS CLAIMED IS:

1.   A foamable vinyl chloride-based resin composition which comprises:

(a) 100 parts by weight of a vinyl chloride-based resin;

(b) from 10 to 100 parts by weight of an $\alpha$-methylstyrene-based resin;

(c) at least 0.01 part by weight of a cell-uniformizing agent selected from the group consisting of decomposable blowing agents and fine powdery materials having a high melting point; and

(d) from 3 to 30 parts by weight of a foam conditioning agent selected from the group consisting of acrylic resins and styrene-based resins.

2.   The foamable vinyl chloride-based resin composition as claimed in claim 1 wherein the $\alpha$-methylstyrene-based resin is a copolymer or a graft copolymer composed of from 50 to 95 parts by weight of $\alpha$-methylstyrene moieties, from 3 to 30 parts by weight of acrylonitrile moieties, up to 30 parts by weight of methyl methacrylate moieties and up to 50 parts by weight of the moieties of other vinylic monomers.

3.   The foamable vinyl chloride-based resin composition as claimed in claim 1 wherein the amount of the cell-uniformizing agent, which is a decomposable blowing agent, is 5 parts by weight or smaller per 100 parts by weight of the component (a).

4.    The foamable vinyl chloride-based resin composition as claimed in claim 1 wherein the acrylic resin or the styrene-based resin as the component (d) has a reduced viscosity of at least 3.0 dl/g at 20 °C as determined in a chloroform solution of a concentration of 0.1 g/100 ml.

5.    The foamable vinyl chloride-based resin composition as claimed in claim 1 wherein the acrylic resin is a polymethyl methacrylate or a copolymer mainly composed of methyl methacrylate with an ester of acrylic acid.

6.    The foamable vinyl chloride-based resin composition as claimed in claim 1 wherein the styrene-based resin is a copolymer mainly composed of styrene with acrylonitrile.

7.    A method for the preparation of a cellular foamed body of a vinyl chloride-based resin composition which comprises the steps of:
(i) introducing a foamable vinyl chloride-based resin composition comprising (a) 100 parts by weight of a vinyl chloride-based resin, (b) from 10 to 100 parts by weight of an $\alpha$-methylstyrene-based resin, (c) at least 0.01 part by weight of a cell uniformizing agent selected from the group consisting of decomposable blowing agents and fine powdery materials having a high melting point and (d) from 3 to 30 parts by weight of a foam conditioning agent selected from the group consisting of acrylic resins and styrene-based resins into the cylinder of an extruder machine;

(ii) heating the foamable vinyl chloride-based resin composition in the cylinder of the extruder machine into a softened state;

(iii) impregnating the softened foamable vinyl chloride-based resin composition with a volatilizable blowing agent which is introduced into the cylinder of the extruder machine by pressurization; and

(iv) extruding the foamable vinyl chloride-based resin softened and impregnated with the volatilizable blowing agent in the cylinder of the extruder machine out of the extruder machine to be shaped with simultaneous foaming.

8.    The method as claimed in claim 7 wherein the volatilizable blowing agent is an aliphatic hydrocatbon compound or a halogenated aliphatic hydrocarbon compound having a boiling point of 90 °C or below.

9.    The method as claimed in claim 7 wherein the amount of the volatilizable blowing agent is in the range from 1 to 30 % by weight based on the foamable vinyl chloride-based resin composition.